# EUROPEAN PATENT APPLICATION

(11) **EP 1 814 039 A2**
(43) Date of publication of application: **01.08.2007**
(21) Application number: 06256444.8
(22) Date of filing: 20.12.2006
(51) Int. Cl.: G06F 12/08

(54) **Device, system and method of multistate cache coherence scheme**

(30) Priority: 27.12.2005 US 316949
(71) Applicant: Intel Corporation, Santa Clara, CA 95052 (US)
(72) Inventor: Mendelson, Abraham, Haifa 34995 (IL); Mandelblat, Julius, Haifa (IL); Hughes, Christopher J., San Jose, CA 95134 (US); Kim, Daehyun, San Jose, CA 95134 (US); Lee, Victor W., San Jose, CA 95131 (US); Nguyen, Anthony D., Castro Valley CA 94546-1611 (US); Chen, Yen-Knang, Cupertino, CA 95014 (US)
(74) Representative: Beresford, Keith Denis Lewis

(57) **Abstract**

Some embodiments of the invention provide devices, systems and methods of cache coherence. For example, an apparatus in accordance with an embodiment of the invention includes a memory to store a memory line; and a cache controller logic to assign a first cache coherence state to the memory line in relation to a first component, and to assign a second, different, cache coherence state to the memory line in relation to a second, different, component.

## Description

### BACKGROUND OF THE INVENTION

A computing platform may include one or more processor cores, which may be connected to one or more memory units, e.g., a level-1 cache memory and a level-2 cache memory. For example, a first processor core may be connected to a first, private, level-1 cache memory; a second processor core may be connected to a second, private, level-1 cache memory; and the first and second level-1 cache memories may be connected to a shared level-2 cache memory.

A memory line of a memory unit may have, at a certain time point, a single cache coherence state out of multiple possible cache coherence states, for example, either a modified ("M") state, an owned ("O") state, an exclusive ("E") state, a shared ("S") state, or an invalid ("I") state. For example, a memory line may have a shared state, indicating that the memory line may be shared internally within sub-units of a processing unit, as well as externally with other components of the computing platform.

### BRIEF DESCRIPTION OF THE DRAWINGS

The subject matter regarded as the invention is particularly pointed out and distinctly claimed in the concluding portion of the specification. The invention, however, both as to organization and method of operation, together with features and advantages thereof, may best be understood by reference to the following detailed description when read with the accompanied drawings in which:
FIG. 1 is a schematic block diagram illustration of a computing platform utilizing a multi-state cache coherence scheme in accordance with an embodiment of the invention; and
FIG. 2 is a schematic flow-chart of a method of managing multiple cache coherence states in accordance with an embodiment of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following detailed description, numerous specific details are set forth in order to provide a thorough understanding of the invention. However, it will be understood by those of ordinary skill in the art that the invention may be practiced without these specific details. In other instances, well-known methods, procedures, components, units and/or circuits have not been described in detail so as not to obscure the invention.

Embodiments of the invention may be used in a variety of applications. Although embodiments of the invention are not limited in this regard, embodiments of the invention may be used in conjunction with many apparatuses, for example, a computer, a computing platform, a personal computer, a desktop computer, a mobile computer, a laptop computer, a notebook computer, a Personal Digital Assistant (PDA) device, a tablet computer, a server computer, a network, a wireless device, a wireless station, a wireless communication device, or the like. Embodiments of the invention may be used in various other apparatuses, devices, systems and/or networks.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and/or "a plurality" as used herein may include, for example, "multiple" or "two or more". The terms "plurality" and/or "a plurality" may be used herein describe two or more components, devices, elements, parameters, or the like. For example, "a plurality of processors" may include two or more processors.

Although embodiments of the invention are not limited in this regard, the term "memory block" as used herein may include, for example, one or more memory lines, one or more memory addresses, one or more memory portions, one or more memory banks, one or more memory sub-units, one or more memory records or fields, or the like.

Although portions of the discussion herein may relate, for demonstrative purposes, to memory units such as, for example, cache memory, level-1 cache and/or level-2 cache, embodiments of the invention are not limited in this regard, and may be used in conjunction with various other memory units or storage units, for example, non-cache memory, memory units or storage units which may be external or internal to a processor or a processing unit, memory units or storage units which may be external or internal to a motherboard or a computing platform, internal memory, external memory, graphics memory, on-board memory, extended memory, memory included in or associated with a graphics processing card or graphics rendering card, memory included in or associated with a three-dimension (3D) graphics processing card or graphics rendering card, video memory, temporary memory, buffers, registers, accumulators, volatile memory, non-volatile memory, private cache or memory, a non-private cache or memory, shared cache, short-term memory, long-term memory, reference memory, intermediate memory, a data cache or memory, an instructions cache or memory, a data/instructions cache or memory, a memory or cache having one or more lines or blocks of lines, a memory or cache having one or more portions or banks, or the like.

Although portions of the discussion herein may relate, for demonstrative purposes, to a processing unit having two levels of cache, e.g., level-1 cache and level-2 cache, embodiments of the invention are not limited in this respect, and may be used in conjunction with processing units and/or computing platforms utilizing other numbers of cache levels, e.g., more than two cache levels.

Although embodiments of the invention are not limited in this regard, some cache memories and/or memory units which may be used in conjunction of embodiments of the invention may include, for example, one or more or a combination of: a Random Access Memory (RAM), a main RAM, a Static RAM (SRAM), a Dynamic RAM (DRAM), a Burst Static RAM (BS-RAM), a SyncBurst RAM (BS-RAM), a Fast Page Mode DRAM (FPM-DRAM), an Enhanced DRAM (EDRAM), and Extended Data Output RAM (EDO-RAM), an EDO-DRAM, a Burst Extended Data Output DRAM (BEDO-DRAM), a Non-Volatile RAM (NV-RAM), a Synchronous DRAM (SD-RAM), a Joint Electron Device Engineering Council SD-RAM (JEDEC SD-RAM), a PC100 SD-RAM, a Double Data Rate SD-RAM (DDR SD-RAM), an Enhanced SD-RAM (ESD-RAM), a Direct Rambus DRAM (DRD-RAM), a SyncLink DRAM (SLD-RAM), a Ferroelectric RAM (F-RAM), a Video RAM (VRAM), Synchronous Graphics RAM (SG-RAM), a dual-ported RAM, a Window RAM (W-RAM), a Multibank DRAM (MD-RAM), or the like.

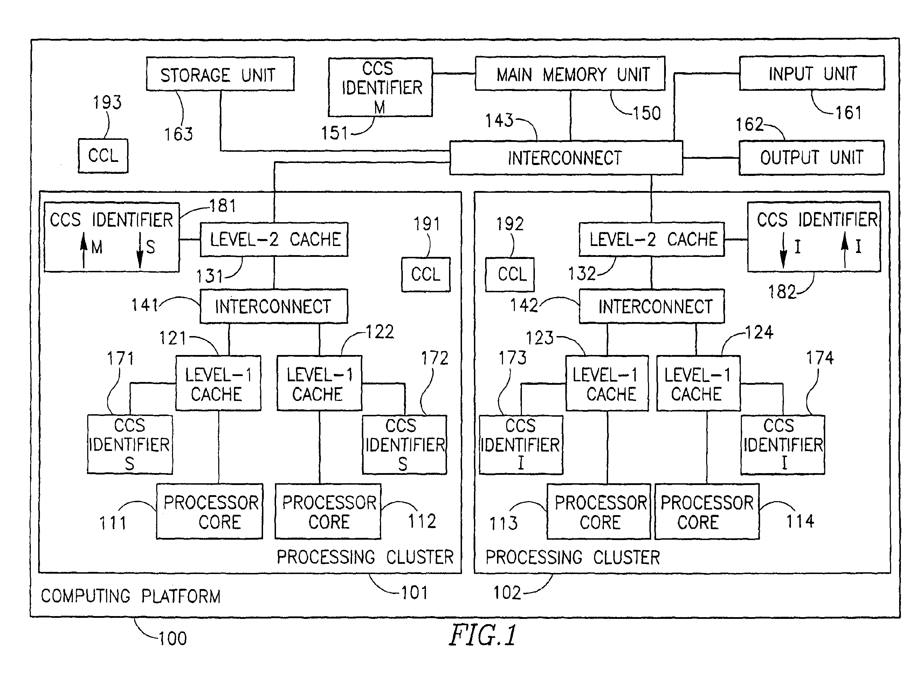

FIG. 1 schematically illustrates a computing platform 100 utilizing a multi-state cache coherence scheme in accordance with an embodiment of the invention. Computing platform 100 may include, for example, an input unit 161, an output unit 162, a storage unit 163, and a main memory unit 150. Computing platform 100 may further include one or more processors, processing units, or Chip-level MultiProcessing (CMP) units, e.g., processing clusters 101 and 102. Computing platform 100 may include other suitable hardware components and/or software components.

Input unit 161 may include, for example, a keyboard, a keypad, a mouse, a touch-pad, or other suitable pointing device or input device. Output unit 162 may include, for example, a screen, a monitor, a speaker, a Cathode Ray Tube (CRT) monitor or display unit, a Liquid Crystal Display (LCD) monitor or display unit, or other suitable monitor or display unit.
Storage unit 163 may include, for example, a hard disk drive, a floppy disk drive, a Compact Disk (CD) drive, a CD-ROM drive, or other suitable removable or non-removable storage units.
Memory unit 150 may include, for example, a Random Access Memory (RAM), a Read Only Memory (ROM), a Dynamic RAM (DRAM), a Synchronous DRAM (SD-RAM), a Flash memory, a volatile memory, a non-volatile memory, a cache memory, a buffer, a short term memory unit, a long term memory unit, or other suitable memory units or storage units.

Processing cluster 101 may include, for example, a Central Processing Unit (CPU), a Digital Signal Processor (DSP), a microprocessor, a controller, a chip, a microchip, an Integrated Circuit (IC), or any other suitable multi-purpose or specific processor or controller. For example, processing cluster 101 may include one or more processors or processor cores, e.g., processor cores 111 and 112. Processor core 111 may be connected to a private level-1 cache memory 121, and processor core 112 may be connected to a private level-1 cache memory 122. Level-1 cache memories 121 and 122 may be connected to a level-2 cache memory 131, optionally through a local interconnect 141, e.g., a bus or point-to-point interconnect..

Similarly, processing cluster 102 may include, for example, a Central Processing Unit (CPU), a Digital Signal Processor (DSP), a microprocessor, a controller, a chip, a microchip, an Integrated Circuit (IC), or any other suitable multi-purpose or specific processor or controller. For example, processing cluster 102 may include one or more processors or processor cores, e.g., processor cores 113 and 114. Processor core 113 may be connected to a private level-1 cache memory 123, and processor core 114 may be connected to a private level-1 cache memory 124. Level-1 cache memories 123 and 124 may be connected to a level-2 cache memory 132, optionally through a local interconnect 142, e.g., a bus or point-to-point interconnect.

Level-2 cache memory 131 of processing cluster 101, and level-2 cache memory 132 of processing cluster 102, may be connected to main memory unit 150, optionally through a global interconnect 143, e.g., a global bus, a system bus, a point-to-point interconnect, or the like.
Computing platform 100 may optionally include one or more Cache Control Logic (CCL) components or modules, for example, a CCL 191 associated with or included in processing cluster 101, a CCL 192 associated with or included in processing cluster 102, a CCL 193 associated with main memory unit 150 and/or other components external to processing clusters 101-102, or the like. In some embodiments, CCLs 191, 192 and/or 193 may be implemented using one or more hardware components and/or software components, using a dedicated unit, as a sub-unit of one or more components of computing platform 100, using a driver, using a general or dedicated controller or processor, using an Integrated Circuit (IC), or the like. In some embodiments, the functionality of CCLs 191, 192 and/or 193 may be implemented using a directory-based cache logic, using a snooping-based cache logic, or the like.

Level-1 cache memories 121, 122, 123 and 124, level-2 cache memories 131 and 132, and/or main memory unit 150 may include, or may be operatively associated with, one or more identifiers of Cache Coherency State (CCS). The CCS identifier(s) may include data identifying the CCS associated with, or corresponding to, one or more memory blocks. In some embodiments, the CCS identifier(s) may optionally include, or may be implemented as part of, a memory unit, a memory manager, a memory controller, a circuit or sub-circuit, a logic controller, one or more pointers, one or more tables, one or more data items, or the like.

For example, level-1 cache memories 121-124 may include, or may be associated with, CCS identifiers 171-174, respectively; level-2 cache memories 131-132 may include, or may be associated with, CCS identifiers 181-182, respectively; and main memory unit 150 may include, or may be associated with, a CCS identifier 151.

In accordance with some embodiments of the invention, a memory block may have multiple, e.g., different, CCSs vis-à-vis or with respect to one or more other components of computing platform 100. For example, a memory block may have a first CCS vis-à-vis or with respect to a first component of computing platform 100, and a second, different, CCS vis-à-vis or with respect to a second, different, component of computing platform 100. In some embodiments, for example, memory block may substantially simultaneously have multiple CCS such as, for example, a modified ("M") state, a shared ("S") state, an exclusive ("E") state, an invalid ("I") state, and/or other suitable CCS values, e.g., vis-à-vis or with respect to various components of computing platform 100. In some embodiments, for example, CCLs 191, 192 and/or 193, or other components of computing platform 100, may be used to set or modify a CCS of a memory block of computing platform 100.

For example, CCS identifier 181 of level-2 cache 131 may substantially simultaneously include two indications: a first indication that a memory block of level-2 cache 131 has a "modified" CCS vis-à-vis or with respect to main memory unit 150 and/or processing cluster 102; and a second indication that that memory block of level-2 cache 131 further has a "shared" CCS vis-à-vis or with respect to level-1 cache memories 121-122 and/or processor cores 111-112. The multiple CCSs may be set and/or modified, for example, by CCLs 191, 192 and/or 193, or other components of computing platform 100.

In some embodiments, for example, one or more CCS identifiers in computing platform 100 may include indications of multiple substantially-simultaneous CCSs, whereas one or more other CCS identifiers in computing platform 100 may include indications of single CCSs. For example, level-2 cache memory 131 may substantially simultaneously have two CCS, e.g., a "modified" CCS towards, or in relation to or vis-à-vis, main memory 150 and a "shared" CCS towards or in relation to level-1 caches 121-122; whereas level-1 cache memory 111 may have a single CCS, e.g., a "shared" CCS, towards, or in relation to or vis-à-vis, both level-2 cache 131 and processor core 111, and main memory unit 150 may have a single CCS, e.g., a "modified" CCS. The various CCSs may be set and/or modified, for example, by CCLs 191, 192 and/or 193, or other components of computing platform 100.

In accordance with some embodiments of the invention, a memory block of a memory component of computing platform 100 may substantially simultaneously have a first CCS vis-à-vis or with respect to component(s) connected between that memory component and a processor core (i.e., a first CCS "towards the processor core", in the direction of the processor core, a "downlink" CCS, an "internal" CCS, or a downward-looking CCS); and a second, different, CCS vis-à-vis or with respect to component(s) that are not connected between that memory component and the processor core (i.e., a second, different, CCS "away from the processor core", in a direction substantially opposite to the direction of the processor core, in a direction different than the direction of the processor core, an "uplink" CCS, an "external" CCS, or an upward-looking CCS). For example, level-2 cache memory 131 may substantially simultaneously have a first CCS, e.g., a "shared" CCS, towards processor cores 111-112; and a second, different CCS, e.g., a "modified" CCS, away from processor cores 111-112. The multiple or various CCSs may optionally be set and/or modified, for example, by CCLs 191, 192 and/or 193, or other components of computing platform 100.

In some embodiments, for example, a memory block of a memory component of computing platform 100 may substantially simultaneously have a first CCS vis-à-vis or with respect to component(s) having a first hierarchy, e.g., a hierarchy higher than the hierarchy of the memory component, a "parent" component, or a component located at a higher branch; and a second, different, CCS vis-à-vis or with respect to component(s) having a second, different, hierarchy, e.g., a hierarchy lower than the hierarchy of the memory component, a "child" component, or a component located at a lower branch. The multiple or various CCSs may optionally be set and/or modified, for example, by CCLs 191, 192 and/or 193, or other components of computing platform 100.

In accordance with some embodiments of the invention, a memory block of a memory component of computing platform 100 may substantially simultaneously have a first, local CCS, and a second, global, CCS. The local CCS may be, for example, vis-à-vis or with respect to components located in proximity to the memory component, vis-à-vis or with respect to components located in the same processing cluster of the memory component, vis-à-vis or with respect to components having a direct connection or a local connection with the memory component, vis-à-vis or with respect to components that are connected to the memory component not using a bus or a point-to-point interconnect, or the like. The global CCS may be, for example, vis-à-vis or with respect to components located on a card or die separate from the memory component, vis-à-vis or with respect to components located on a chip or physical unit separate from the memory component, vis-à-vis or with respect to components that are connected to the memory component using a bus or a point-to-point interconnect, or the like. For example, level-2 cache memory 131 may substantially simultaneously have a first, local, CCS, e.g., a "shared" CCS, towards or in relation to processor cores 111-112 or local interconnect 141; and a second, global, CCS, e.g., a "modified" CCS, towards or in relation to global interconnect 143 or processing cluster 102. The multiple or various CCSs may optionally be set and/or modified, for example, by CCLs 191, 192 and/or 193, or other components of computing platform 100.

In one embodiment, for example, a memory line of level-1 caches 121-122 may have a "shared" CCS, e.g., the memory line may be read-shared among processor cores 111-112. A corresponding memory line of level-2 cache 131 may have a "shared" downward-looking CCS, and may further have a "modified" upward-looking CCS. A directory in main memory unit 150, or CCS identifier 151, may indicate that the corresponding memory line has a "modified" CCS and is "owned" by processing cluster 101. Other memory units of computing platform, for example, level-2 cache 132 of processing cluster 102 and/or level-1 caches 123-124 of processing cluster 102, may include, or may be associated with, a CCS identifier indicating that the corresponding memory line has an "invalid" CCS. In this embodiment, for example, main memory unit 150, and/or components of processing cluster 102, regard the level-2 cache 131 as a cache having a "modified" state, regardless of the possibility that level-2 cache 131 may have a different CCS, e.g., may be read-shared among processor cores 111-112. For example, processor core 113 of processing cluster 102 may request to access the memory line of level-2 cache having an "invalid" CCS; in response, the corresponding copies in private level-1 caches 121-122 of processing cluster 101 may be invalidated, and the requested memory line may be forwarded to processor core 113 of processing cluster 102.

Some embodiments may be used in conjunction with one or more cache coherence protocols, for example, a Modified - Owned - Exclusive - Shared - Invalid (MOESI) protocol, a Modified - Exclusive - Shared - Invalid (MESI) protocol, a Modified - Shared - Invalid (MSI) protocol, or the like. In some embodiments, for example, a memory component may utilize a first cache coherence protocol to communicate with a first set of components, e.g., local components, components at a lower branch or hierarchy, components at a first level, or the like; and may substantially simultaneously utilize a second, different, cache coherence protocol to communicate with a second set of components, e.g., global components, components at a higher branch or hierarchy, components at a second level, or the like. Furthermore, in some embodiments, multiple, e.g., different, cache coherence protocols may be used at multiple branches which may be at the same level.

Optionally, one or more cache coherence rules or cache coherence definitions may be used, for example, to implement cache coherence architecture in accordance with embodiments of the invention. For example, a cache coherence rule may indicate that a memory line may have a global "shared" CCS if the memory line has a "shared" CCS or an "invalid' CCS in substantially all cache memories of a processing cluster, e.g., in caches 121, 122 and 131 of processing cluster 101. Another cache coherence rule, for example, may indicate that a memory line may have a local "shared" CCS if the memory line has an "exclusive" or "modified" CCS in level-2 cache 131 and further has a "shared" or "invalid" CCS in level-1 caches 121-122. Yet another cache coherence rule, for example, may indicate that a memory line may be exclusively owned by a processing cluster 101 if at least one of its caches (e.g., caches 121, 122 and 131) identifies that memory line as having an "exclusive" or "modified" CCS. Still another cache coherence rule, for example, may indicate that a memory line of a first memory component may have a "shared" CCS only internally or locally, e.g., downward-looking towards a processor core, if a corresponding memory line of a higher-level cache has an "exclusive" or "modified" CCS; whereas the memory line may have a global or external "shared" CCS, e.g., upward-looking away from the processor core, if a corresponding memory line of a higher-level cache has a "shared" CCS. Other suitable rules or definitions may be used in accordance with embodiments of the invention. In some embodiments, optionally, one or more rules or definitions may be set, modified, and/or utilized, for example, by CCLs 191, 192 and/or 193, or other components of computing platform 100.

In some embodiments, a memory line of level-2 cache 131 may substantially simultaneously have an internal CCS of "shared" towards or in relation to level-1 caches 121-122, and an external CCS of "exclusive" towards or in relation to main memory unit 150 and/or processing cluster 101. Such architecture may replace, for example, a single CCS of "shared" towards or in relation to all components of computing platform 101. In some embodiments, for example, this architecture may obviate a need to send a Request For Ownership (RFO) indication to components external to processing cluster 101, and optionally may obviate a need to receive responses from such external components that their corresponding memory line(s) are invalidated. Some embodiments may, for example, reduce the used bandwidth (e.g., of interconnect 143), improve performance, and allow an internal, fast RFO among internal caches, e.g., among level-1 caches 121-122.

Some embodiments of the invention may be used, for example, with directory-based cache coherence protocols and/or snooping-based cache coherence protocols. For example, in some embodiments, optionally, processing core 111 may perform "snooping" operations with respect to processing core 112, e.g., upon or substantially together with accessing level-2 cache 131.

For example, processing core 111 may access the level-2 cache 131, and may send to processing core 112 a coherence request, e.g., a directory-based coherence request or a snooping-based coherence request. The coherence request may include, for example, information about the operation that processor core 111 performs with respect to the level-2 cache 131 (e.g., "processor 111 performs a read operation on memory line 345" or "processor 111 performs a write operation on memory line 567"); and/or information about operations that processor 112 is requested or required to perform (e.g., "processor 112 is allowed to read from memory line 789 but is not allowed to write to memory line 789", or "processor 112 is required to invalidate its memory line 456").

In one embodiment, the coherence request may include, for example, one or more attributes, types, characteristics and/or properties related to the access of the memory line by the processor core 111. In some embodiments, processor core 111 need not wait for a response to the coherence request that processor 111 sends to one or more other processors, and may perform the reported operation substantially together with sending the coherence request, or immediately subsequent to sending the coherence request. In response to the received coherence request, processor core 112 may send to processor 111 a coherence response (e.g., directory-based or "snooping"-based), may modify its operation based on the received coherence request, may perform one or more operations or instructions indicated by the received coherence request, may invalidate one or more memory lines, or the like. Optionally, CCLs 191, 192 and/or 193 may be utilized to manage, control, store, track and/or transfer cache coherence requests and/or cache coherence responses.

In some embodiments, associating a memory line with more than one CCS may be performed in various suitable ways, e.g., not necessarily utilizing a CCS identifier indicating that the memory line has two or multiple CCSs. For example, in some embodiments, a memory line in a first memory unit (e.g., level-1 cache memory 121) may have a first single CCS, a memory line in a second memory unit (e.g., level-2 cache memory 131) may have a second single CCS per line, and a final or combined CCS may be reported to external components (e.g., to main memory unit 150) based on a composition of the first CCS and the second CCS, or otherwise based on a calculation that takes into account the first CCS and the second CCS. In other embodiments, snooping-based queries, responses, instructions and/or data items may be utilized.
In some embodiments, optionally, multiple CCSs of a memory line may coincide or overlap. For example, a memory line may have a first CCS in relation to a first component, and a second CCS in relation to a second component; the first CCS may, in some cases, be similar or substantially identical to the second CCS, or a single CCS in relation to the first and second components may replace the first and second separate CCSs.

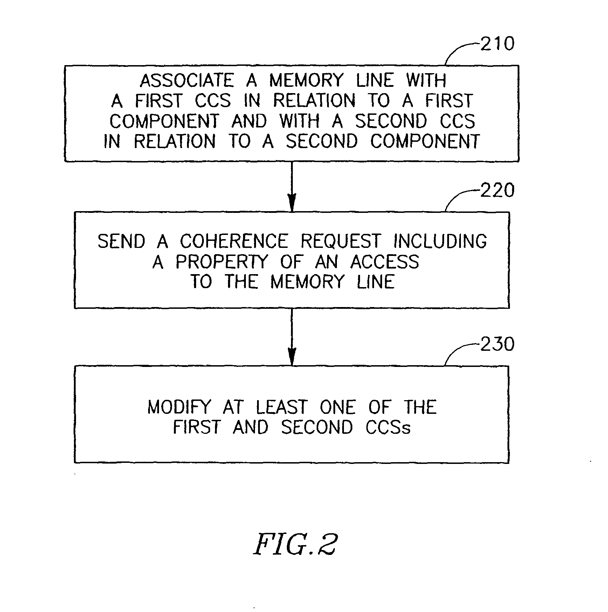

FIG. 2 is a schematic flow-chart of a method of managing multiple cache coherence states in accordance with an embodiment of the invention. Operations of the method may be implemented, for example, by computing platform 100 of FIG. 1 or by components thereof, by CCLs 191, 192 and/or 193 of FIG. I, and/or by other suitable computers, processors, components, devices, and/or systems.

As indicated at box 210, the method may optionally include, for example, associating a memory line of a memory unit, e.g., substantially simultaneously, with a first CCS towards or in relation to a first component or set of components of a computing platform, and with a second, different, CCS towards or in relation to a second, different, component or set of components of the computing platform. Optionally, this may be performed utilizing CCLs 191, 192 and/or 193 of FIG. 1, utilizing a directory-based cache coherence protocol, using a snooping-based cache coherence protocol, using one or more CCS identifiers associated with memory lines or memory blocks, or the like.

As indicated at box 220, the method may optionally include, for example, sending a coherence request, e.g., between processors of the computing platform upon or together with accessing a memory line. This may include, for example, sending a coherence request having a representation of an operation that a first processor performs or is about to perform with respect to the memory line, a representation of a type of access that the first processor performs or is about to perform with respect to the memory line, a representation of an operation that a second processor is requested to perform, a representation of a CCS modification that the second processor is requested to perform, or the like.

As indicated at box 230, the method may optionally include, for example, modifying at least one of the first and second CCSs of a memory line. In one embodiment, for example, a first CCS associated with a memory line towards or in relation to a first component may be modified, whereas a second, substantially simultaneous, CCS associated with the memory line towards or in relation to a second component may be maintained, e.g., unmodified. Optionally, this may be performed utilizing CCLs 191, 192 and/or 193 of FIG. 1, utilizing a directory-based cache coherence protocol, using a snooping-based cache coherence protocol, using one or more CCS identifiers associated with memory lines or memory blocks, or the like.

Other suitable operations or sets of operations may be used in accordance with embodiments of the invention.

Although portions of the discussion herein may relate, for demonstrative purposes, to a memory block having two different CCSs vis-à-vis or with respect to two, respective, components or sets of components, embodiments of the invention are not limited in this regard. For example, in some embodiments, a memory block may substantially simultaneously have more than two (e.g., three, four, five, etc.) different CCSs vis-à-vis or with respect to various components or sets of components. In accordance with some embodiments of the invention, a dual-state cache coherence scheme, a triple-state cache coherence scheme, a quadruple-state cache coherence scheme, or other multiple-state cache coherence scheme may be used.

Some embodiments of the invention may be implemented by software, by hardware, or by any combination of software and/or hardware as may be suitable for specific applications or in accordance with specific design requirements. Embodiments of the invention may include units and/or sub-units, which may be separate of each other or combined together, in whole or in part, and may be implemented using specific, multi-purpose or general processors or controllers, or devices as are known in the art. Some embodiments of the invention may include buffers, registers, stacks, storage units and/or memory units, for temporary or long-term storage of data or in order to facilitate the operation of a specific embodiment.

Some embodiments of the invention may be implemented, for example, using a machine-readable medium or article which may store an instruction or a set of instructions that, if executed by a machine, for example, by processing clusters 101 or 102 of FIG. I, by other suitable machines, cause the machine to perform a method and/or operations in accordance with embodiments of the invention. Such machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit (e.g., memory unit 150), memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Re-Writeable (CD-RW), optical disk, magnetic media, various types of Digital Versatile Disks (DVDs), a tape, a cassette, or the like. The instructions may include any suitable type of code, for example, source code, compiled code, interpreted code, executable code, static code, dynamic code, or the like, and may be implemented using any suitable high-level, low-level, object-oriented, visual, compiled and/or interpreted programming language, e.g., C, C++, Java, BASIC, Pascal, Fortran, Cobol, assembly language, machine code, or the like.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

## Claims

1. An apparatus comprising:
a memory to store a memory line; and
a cache controller logic to assign a first cache coherence state to the memory line in relation to a first component, and to assign a second, different, cache coherence state to the memory line in relation to a second, different, component.

2. The apparatus of claim 1, wherein the cache controller logic is to assign the first cache coherence state towards a processor and to assign the second cache coherence state away from the processor.

3. The apparatus of claim 1, wherein the cache controller logic is to assign the first cache coherence state in relation to one or more local components and to assign the second cache coherence state in relation to one or more global components.

4. The apparatus of claim 1, wherein the cache controller logic is to assign the first cache coherence state in relation to a lower-level memory unit and to assign the second cache coherence state in relation to a higher-level memory unit.

5. The apparatus of claim 1, wherein the cache controller logic is to assign the first cache coherence state in relation to one or more components having a first hierarchy and to assign the second cache coherence state in relation to one or more components having a second hierarchy.

6. The apparatus of claim 1, wherein the memory comprises a first cache memory of a processor, and wherein the cache controller logic is to assign the first cache coherence state in relation to a second cache memory of the processor and to assign the second cache coherence state in relation to a component external to the processor.

7. The apparatus of claim 1, wherein the memory comprises a level-2 cache of a processor, wherein the first component comprises a level-1 cache of the processor, and wherein the second component comprises another memory which is external to the processor.

8. The apparatus of claim 1, wherein the cache controller logic is to modify the first cache coherence state while the second cache coherence state is maintained unmodified.

9. A system comprising:
a memory unit to store a plurality of memory lines; and
a cache controller logic to associate a cache coherence state identifier with at least one memory line of said plurality of memory lines, to set the identifier to associate the at least one memory line with a first cache coherence state in relation to a first component of the system, and to set the identifier to associate the at least one memory line with a second, different, cache coherence state in relation to a second, different, component of the system.

10. The system of claim 9, wherein the memory unit comprises a cache memory shared among a plurality of processor cores of a processing unit, the first component comprises a private cache of at least one of said processor cores, and the second component is external to said processing unit.

11. The system of claim 9, further comprising:
a first processor core to access the at least one memory line, and to send to a second processor core a coherence request indicating an attribute of the access of the first processor to the at least one memory line.

12. The system of claim 11, wherein the attribute is selected from a group consisting of: a read attribute, a write attribute, and a Request For Ownership attribute.

13. The system of claim 12, wherein based on the coherence request, the second processor is to modify a cache coherence state of a memory line of a sub-unit of the second processor in relation to the at least one memory line accessed by the first processor.

14. The system of claim 9, wherein the cache controller logic is to modify the first cache coherence state while the second cache coherence state is maintained unmodified.

15. The system of claim 9, wherein the first and second cache coherence states are selected from a group consisting of: modified, owned, exclusive, shared, and invalid.

16. A method comprising:
associating a memory line of a memory with a first cache coherence state in relation to a first component and with a second, different, cache coherence state in relation to a second, different, component.

17. The method of claim 16, wherein associating comprises:
setting a cache coherence state identifier corresponding to said memory line.

18. The method of claim 16, further comprising:
modifying the first cache coherence state while the second cache coherence state is maintained unmodified.

19. The method of claim 16, further comprising:
accessing the memory line; and
sending to a sub-unit of a computing platform a coherence request indicating a property of the access to the memory line.

20. The method of claim 19, further comprising:
based on the received coherence request, modifying a cache coherent state of the sub-unit vis-à-vis the accessed memory line.
